# FASCICULE DE BREVET EUROPEEN

(11) **EP 4 123 187 B1**
(45) Date de publication et mention de la délivrance du brevet: **03.04.2024**
(21) Numéro de dépôt: 22186089.3
(22) Date de dépôt: 20.07.2022
(51) Int. Cl.: F16B 19/10

(54) **FIXATION POUR L'ASSEMBLAGE TEMPORAIRE DE STRUCTURES**
BEFESTIGUNG FÜR DIE VORÜBERGEHENDE MONTAGE VON STRUKTUREN
ATTACHMENT FOR TEMPORARY ASSEMBLY OF STRUCTURES

(30) Priorité: 22.07.2021 FR 2107918
(43) Date de publication de la demande: 25.01.2023
(73) Titulaire: Lisi Aerospace, 75012 Paris (FR)
(72) Inventeur: BRACHET, Julien, 18500 MEHUN SUR YEVRE (FR); DEFRANCE, Vincent, 18120 PREUILLY (FR)
(74) Mandataire: Lavoix

(56) Documents cités:
- EP-A1- 3 147 520
- US-A1- 2021 025 424
- US-B2- 10 190 615

## Description

La présente invention concerne une fixation pour l'assemblage temporaire d'au moins deux structures comprenant un perçage, du type comportant : un corps tubulaire, s'étendant selon un axe principal, entre une première extrémité et une seconde extrémité comprenant au moins deux languettes longitudinales ; un élément d'accrochage, bloqué en rotation par rapport au corps et apte à coulisser axialement dans le corps ; ledit élément d'accrochage comprenant : une base tubulaire ; et une pluralité de pinces élastiques reliées à une extrémité de ladite base, chaque pince comprenant un bec d'accrochage ; un dispositif d'entraînement de l'élément d'accrochage ; et un écarteur fixe par rapport au corps, la pluralité de pinces élastiques étant disposée autour dudit écarteur.

L'invention s'applique particulièrement aux fixations temporaires de type agrafes d'épinglage.

Dans l'industrie aéronautique, avant de réaliser l'assemblage définitif de deux éléments de structure, il est connu de procéder à un assemblage provisoire desdits éléments au moyen de fixations temporaires insérées dans des trous traversants. De telles fixations temporaires sont notamment décrites dans le document EP3147520 A1 ainsi que dans le document US 2021/025424 A1.

Une agrafe d'épinglage peut assembler des structures dont l'épaisseur totale est comprise dans la plage de capacité de serrage de ladite agrafe, entre une valeur minimale et une valeur maximale de capacité de serrage, un écart entre lesdites valeurs dépendant des caractéristiques de ladite agrafe.

La présente invention a pour but d'optimiser l'encombrement des fixations existantes. En effet, il est avantageux de disposer d'une agrafe d'épinglage permettant d'assembler des structures sur une large plage d'épaisseur totale, sans augmenter la longueur du corps de la fixation.

A cet effet, l'invention a pour objet une fixation du type précité, dans lequel la base tubulaire comporte : une surface externe sensiblement cylindrique ; et au moins deux rainures ménagées longitudinalement dans ladite surface externe ; et dans lequel la fixation est configurée de sorte que chaque languette du corps est apte à coulisser axialement dans l'une des rainures de la base tubulaire, selon la revendication 1.

Suivant d'autres aspects avantageux de l'invention, la fixation comporte l'une ou plusieurs des caractéristiques suivantes, prises isolément ou suivant toutes les combinaisons techniquement possibles :
- l'élément d'accrochage comporte une fente longitudinale ; et la fixation comporte une goupille fixée au corps et traversant ladite fente, de sorte à bloquer en rotation l'élément d'accrochage par rapport au corps ;
- l'écarteur comporte un trou traversant dans lequel passe la goupille ;
- l'élément d'accrochage est en liaison hélicoïdale avec le dispositif d'entraînement, une rotation du dispositif d'entraînement étant ainsi apte à faire coulisser l'élément d'accrochage par rapport au corps ;
- l'élément d'accrochage comprend une tige filetée s'étendant depuis la base tubulaire ; et le dispositif d'entraînement comporte un taraudage apte à coopérer avec ladite tige filetée ;
- la fixation est configurée de sorte que les languettes du corps coulissant axialement dans les rainures de l'élément d'accrochage forment une surface cylindrique sensiblement continue avec la surface externe de la base tubulaire. ;
- chaque languette du corps comporte deux premiers bords longitudinaux sensiblement plans ; et chaque rainure de l'élément d'accrochage comporte : deux deuxième bords longitudinaux, de forme complémentaire aux premiers bords longitudinaux d'une languette correspondante ; et un fond disposé entre les deux deuxièmes bords longitudinaux ;
- le corps comprend une tête élargie, ladite tête comprenant une surface d'appui destinée à venir en appui contre une première face des structures ;
- la tête élargie forme la première extrémité dudit corps, la tête comprenant des premières surfaces de montage aptes à s'assembler à un outil d'installation pour bloquer en rotation ledit corps par rapport aux structures ;
- une extrémité du dispositif d'entraînement comprend des deuxièmes surfaces de montage aptes à s'assembler à l'outil d'installation pour entraîner en rotation ledit dispositif d'entraînement par rapport au corps.

L'invention se rapporte en outre à un assemblage comprenant : des structures à assembler, comprenant une première et une seconde faces opposées, ainsi qu'un perçage débouchant sur chacune desdites première et seconde faces ; et une fixation telle que décrite ci-dessus, la pluralité de pinces élastiques étant disposée dans le perçage, les becs d'accrochage desdites pinces étant disposés autour de l'écarteur, la surface d'appui de la tête et les becs d'accrochage venant au contact respectivement de la première face et de la seconde face des structures.

L'invention sera mieux comprise à la lecture de la description qui va suivre, donnée uniquement à titre d'exemple non limitatif et faite en se référant aux dessins sur lesquels :
- la figure 1 est une vue en perspective éclatée d'une fixation selon un mode de réalisation de l'invention ;
- la figure 2 est une vue en coupe de la fixation de la figure 1, dans une première configuration ; et
- la figure 3 est une vue en coupe d'un assemblage comprenant la fixation des figures 1 et 2 dans une deuxième configuration.

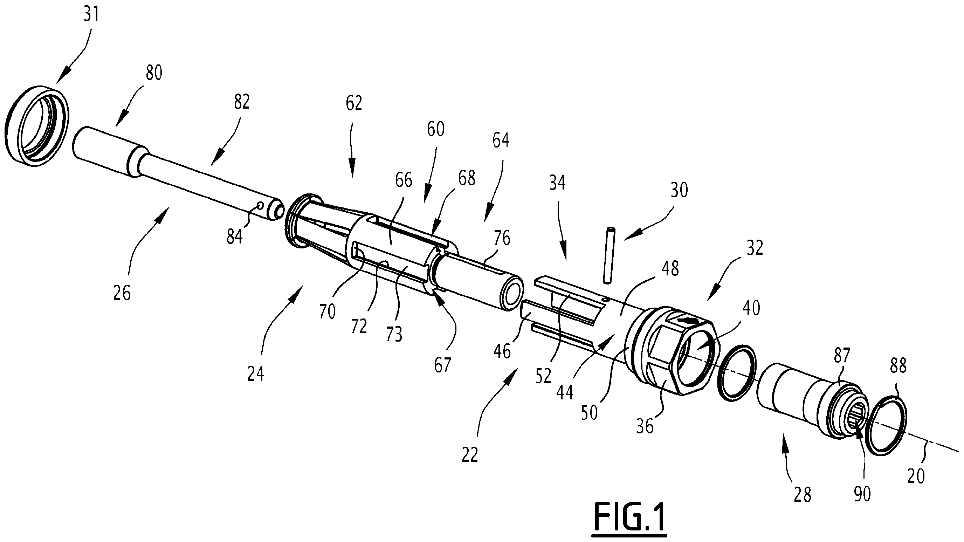

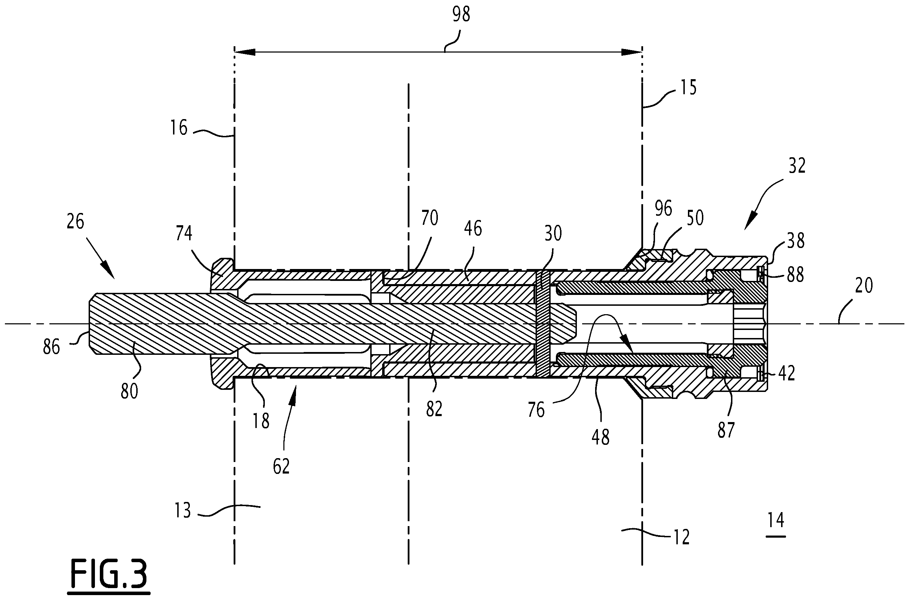

Les figures 1 à 3 représentent une fixation 10 selon un premier mode de réalisation de l'invention. La fixation 10 est apte à assembler temporairement au moins deux structures 12, 13, visibles à la figure 3, pour former un assemblage 14. Les structures 12, 13 définissent deux faces 15, 16 opposées. Un perçage 18 traverse les structures 12, 13 depuis la première 15 jusqu'à la deuxième 16 face.

La fixation 10 s'étend selon un axe principal 20 et comporte : un corps 22 ; un élément d'accrochage 24 ; un écarteur 26 ; un dispositif d'entraînement 28 ; et une goupille 30. Dans le mode de réalisation représenté, la fixation 10 comprend également un embout 31.

Le corps 22 a une forme sensiblement tubulaire, s'étendant selon l'axe principal entre deux extrémités ouvertes. Le corps 22 comporte une tête 32 élargie et un fût 34 tubulaire.

La tête 32 comporte des premières surfaces 36 de montage, destinées à coopérer avec un outil d'installation (non représenté) de la fixation 10, pour un blocage en rotation de la tête 32 par rapport aux structures 12, 13. Dans le mode de réalisation représenté, les premières surfaces de montage sont formées par des pans 36 parallèles à l'axe principal. Par exemple, les premières surfaces de montage comportent six pans 36.

La tête 32 comporte en outre une paroi frontale 38 dans laquelle est ménagée une ouverture frontale 40 formant une première extrémité ouverte du corps 22. A proximité de ladite ouverture frontale, une surface interne de la tête comporte une gorge 42 annulaire.

L'ouverture frontale 40 débouche sur une surface intérieure du corps 22, ladite surface étant sensiblement de section circulaire.

Le fût 34 comporte une partie cylindrique 44 et une pluralité de languettes 46.

La partie cylindrique 44 est adjacente à la tête 32 élargie et comporte une première surface externe 48 lisse, de diamètre avantageusement égal au diamètre du perçage 18 des structures 12, 13, avec un jeu permettant d'insérer sans forcer la fixation 10 dans le perçage 18. Dans le mode de réalisation représenté, la partie cylindrique 44 comporte en outre un filetage 50 sur une faible longueur axiale, à la jonction avec la tête 32 élargie.

Dans un mode de réalisation non représenté, le fût 34 ne comporte pas de partie cylindrique 44 : les languettes 46 sont directement attachées à la tête 32. Dans ce mode de réalisation, l'embout 31 est omis. Une bague peut être éventuellement ajoutée, montée serrée sur l'extrémité des languettes adjacente à la tête, par exemple pour permettre l'identification du diamètre de la fixation par un code couleur.

La pluralité de languettes 46 s'étend axialement à partir de la partie cylindrique 44, une surface externe desdites languettes s'inscrivant dans un cylindre continu avec la première surface externe 48 de ladite partie cylindrique. Les languettes 46 définissent entre elles des ouvertures s'étendant longitudinalement.

Les languettes 46 sont préférentiellement de formes analogues et réparties angulairement de manière régulière autour de l'axe principal 20. Les languettes 46 sont au moins au nombre de deux. Dans le mode de réalisation représenté, le fût 34 comporte quatre languettes 46.

Chaque languette 46 comporte deux bords 52 longitudinaux. Chacun des bords 52 forme une surface plane sensiblement parallèle à l'axe principal 20. Dans le mode de réalisation représenté, les bords 52 d'une même languette 46 sont sensiblement parallèles entre eux.

Dans le mode de réalisation représenté, deux des languettes 46, situées en vis-à-vis par rapport à l'axe principal 20, comportent chacune un orifice 54 fermé, de contour arrondi. Les deux orifices 54 sont alignés perpendiculairement à l'axe principal 20.

L'élément d'accrochage 24 présente une forme sensiblement tubulaire, s'étendant selon l'axe principal 20, et comprend : une base 60 tubulaire ; une pluralité de pinces 62 élastiques ; et une tige 64 filetée.

La base 60 tubulaire comporte une deuxième surface externe 66, sensiblement cylindrique de révolution, d'un diamètre sensiblement égal au diamètre de la première surface externe 48.

La base 60 tubulaire comporte en outre une paroi d'extrémité 67 en forme de couronne, sensiblement perpendiculaire à l'axe principal 20.

La base 60 comporte en outre une pluralité de rainures 68 ménagées longitudinalement dans la deuxième surface externe 66. Les rainures 68 s'étendent entre une première extrémité ouverte, débouchant sur la paroi d'extrémité 67, et une seconde extrémité 70 fermée.

Le nombre des rainures 68 est égal au nombre des languettes 46 du fût 34. Les rainures 68 sont préférentiellement de formes analogues et réparties angulairement de manière régulière autour de l'axe principal 20.

Chaque rainure 68 comporte deux bords 72 longitudinaux, de forme complémentaire aux bords 52 longitudinaux d'une languette 46 correspondante. Chaque rainure 68 comporte en outre un fond 73 plan, disposé entre les deux bords 72 longitudinaux.

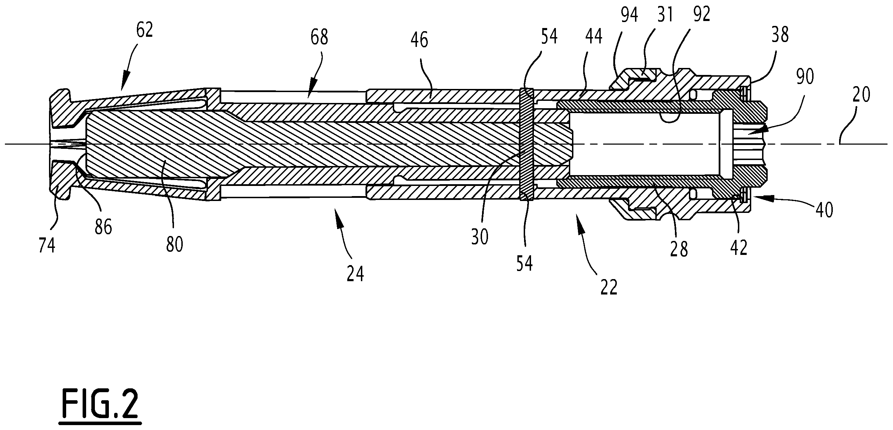

Chaque languette 46 du corps 22 est apte à coulisser axialement dans une rainure 68. Plus précisément, dans une première configuration de la fixation 10 (figure 2), une extrémité de chaque languette 46 est disposée dans l'une des rainures 68, à proximité de la première extrémité ouverte de ladite rainure. Dans une deuxième configuration de la fixation 10 (figure 3), ladite extrémité de chaque languette 46 vient en butée contre la seconde extrémité 70 fermée de ladite rainure. Les languettes 46 forment alors une surface cylindrique continue avec la deuxième surface externe 66 de la base 60 tubulaire.

Les pinces 62 élastiques s'étendent axialement à partir de la base 60, du côté de la deuxième extrémité 70 fermée des rainures 68. Les pinces 62 sont sensiblement identiques, au moins au nombre de deux, et plus préférentiellement au moins au nombre de trois ou quatre afin de mieux répartir l'effort de serrage sur la deuxième face 16 des structures 12, 13. Dans le mode de réalisation représenté, les pinces 62 élastiques sont au nombre de six.

Une extrémité de chaque pince 62 élastique comprend un bec d'accrochage 74, susceptible de venir au contact de la deuxième face 16 des structures 12, 13.

Les pinces 62 présentent une certaine élasticité. Plus précisément, lesdites pinces 62 sont déplaçables radialement par rapport à l'axe principal 20 entre une position rétractée (figure 2), dans laquelle les becs d'accrochage 74 sont au contact les uns des autres, et une position déployée (figure 3), dans laquelle lesdits becs d'accrochage 74 sont écartés latéralement les uns des autres.

La position rétractée correspond à une configuration des pinces 62 au repos, sans contrainte extérieure. Dans la position rétractée, les becs d'accrochage 74 au contact les uns des autres forment sensiblement un anneau de diamètre externe inférieur ou égal au diamètre du perçage 18 des structures 12, 13. Dans la position déployée, les becs d'accrochage 74 forment sensiblement un anneau de diamètre externe supérieur au diamètre du perçage 18 des structures 12, 13.

La tige 64 filetée s'étend axialement depuis la paroi d'extrémité 67 de la base 60, à l'opposé des pinces 62 élastiques.

La tige 64 filetée comporte une fente 76 traversante, s'étendant longitudinalement entre deux extrémités fermées. La fente 76 longitudinale s'étend avantageusement dans un plan contenant l'axe principal 20.

L'écarteur 26 comporte une première 80 et une deuxième 82 parties adjacentes selon l'axe principal 20. Chacune des première et deuxième parties a une forme cylindrique, préférentiellement cylindrique de révolution. De préférence, un diamètre de la première partie 80 est supérieur à un diamètre de la deuxième partie 82.

La deuxième partie 82 de l'écarteur 26 est reçue dans le corps 22 et fixe par rapport audit corps. Plus précisément, une extrémité de la deuxième partie 82, opposée à la première partie 80, comporte un trou traversant 84 perpendiculaire à l'axe principal 20. La goupille 30 est logée dans ledit trou traversant 84 ainsi que dans les orifices 54 du fût 34, solidarisant le corps 22 et l'écarteur 26.

En outre, la deuxième partie 82 de l'écarteur 26 est reçue dans l'élément d'accrochage 24. Plus précisément, la goupille 30 traverse également la fente 76 longitudinale ménagée dans la tige 64 filetée dudit élément d'accrochage.

La première partie 80 de l'écarteur 26 est également disposée à l'intérieur de l'élément d'accrochage 24. Plus précisément, dans la première configuration de la fixation 10 (figure 2), une extrémité 86 de la première partie 80, opposée à la deuxième partie 82, est reçue entre les pinces 62 élastiques. Dans ladite première configuration, l'extrémité 86 est axialement éloignée des becs d'accrochage 74. Les pinces 62 sont alors en position rétractée.

Dans la deuxième configuration de la fixation 10 (figure 3), l'extrémité 86 de l'écarteur forme une saillie axiale par rapport aux pinces 62 ou est reçue entre les becs d'accrochage 74. Lesdites pinces 62 sont alors en position déployée, les becs d'accrochage 74 étant écartés latéralement les uns des autres par la première partie 80 de l'écarteur 26.

Le dispositif d'entraînement 28, également appelé « tirant » dans la description, s'étend selon l'axe principal 20 et est mobile en rotation à l'intérieur du corps 22. Dans le mode de réalisation représenté, le tirant 28 comporte notamment une portion 87 élargie, bloquée en translation à l'intérieur de la tête 32 au moyen d'un jonc 88 logé dans la gorge 42 annulaire.

Une extrémité du tirant 28, disposée au niveau de l'ouverture frontale 40 du corps 22, comporte des deuxièmes surfaces 90 de montage. Lesdites deuxièmes surfaces sont destinées à coopérer avec l'outil d'installation mentionné ci-dessus, pour entraîner en rotation le tirant 28 par rapport au corps 22.

Dans le mode de réalisation représenté, les deuxièmes surfaces de montage sont formées par une empreinte 90 ménagée en creux à l'extrémité du tirant 28. L'empreinte 90 est par exemple de forme cylindrique avec une base hexagonale ou bi-hexagonale. En variante, l'empreinte 90 est une empreinte multilobée, telle que décrite dans le document EP2458232 au nom de la Demanderesse.

Le tirant 28 est en liaison hélicoïdale avec l'élément d'accrochage 24, la rotation du tirant étant ainsi apte à faire coulisser axialement ledit élément d'accrochage par rapport au corps 22. Dans le mode de réalisation représenté, le tirant 28 est tubulaire avec deux extrémités ouvertes, et comporte un taraudage 92 adjacent à l'empreinte 90. Le taraudage 92 est apte à coopérer avec le filetage de la tige 64 de l'élément d'accrochage 24.

L'embout 31 est apte à s'assembler au corps 22, par vissage sur le filetage 50 ou par divers autres moyens comme le clipsage, sertissage, le collage, etc...

Une surface extérieure 94 de l'embout forme une surface fraisée, destinée à prendre place dans une fraisure 96 de l'une des structures 12 à assembler. En variante non représentée, la surface extérieure 94 de l'embout forme un appui plan destiné à prendre appui sur une surface plane de la structure 12, de sorte à former une tête protubérante.

Un procédé d'installation de la fixation 10 dans les structures 12, 13, pour former l'assemblage 14, va maintenant être décrit.

Au début du procédé d'installation, la fixation 10 est dans la première configuration de la figure 2. Eventuellement, ladite fixation est en outre assemblée à un automate (non représenté) équipé d'un outil de montage. En variante, le procédé décrit ci-après est effectué manuellement.

La fixation 10 est disposée en vis-à-vis du perçage 18 des structures 12, 13, du côté de la première face 15. La fixation 10 est alors introduite dans ledit perçage 18 jusqu'à ce que la tête 32 vienne en butée contre ladite première face 15. Dans le mode de réalisation représenté, la surface extérieure 94 de l'embout 31 prend place dans la fraisure 96 de la structure 12.

Les becs d'accrochage 74 des pinces 62, ainsi que l'extrémité 86 de l'écarteur 26, forment alors une saillie axiale par rapport à la deuxième face 16.

Un effort axial est ensuite appliqué sur la tête 32 de sorte à la plaquer contre la structure 12, tout en étant bloquée en rotation par une action sur les pans 36, de préférence au moyen de l'outil de montage.

En parallèle, le tirant 28 est entraîné en rotation par rapport à la tête 32, par application d'un couple de rotation sur ledit tirant par l'intermédiaire de l'empreinte 90.

Le taraudage 92 du tirant s'engage alors sur le filetage de la tige 64. Ladite tige se déplace donc vers la tête 32, entraînant l'ensemble de l'élément d'accrochage 24.

L'élément d'accrochage 24 se déplace axialement dans ledit corps en direction de la tête 32. Le blocage en rotation de l'élément d'accrochage 24 par rapport au corps 22 peut être réalisé par deux mécanismes de reprise d'effort de couple : un premier mécanisme est la goupille 30 logée dans la fente 76 longitudinale, un deuxième mécanisme est le contact entre les bords 52 longitudinaux des languettes contre les bords 72 longitudinaux des rainures. Les efforts de couple sont répartis entre les deux mécanismes de reprise d'effort selon les dimensions des éléments et les jeux prévus lors de la conception et/ou induits lors de la fabrication, de la goupille 30, de la fente 76 longitudinale, des languettes 46 et des rainures 68.

Au cours du déplacement de l'élément d'accrochage 24 par rapport au corps 22, chaque bord 72 longitudinal d'une rainure 68 coulisse contre un bord 52 longitudinal d'une languette 46 correspondante. De même, le fond 73 de chaque rainure 68 coulisse contre une surface interne de la languette 46 correspondante. Les languettes 46 du corps et la deuxième surface externe 66 de la base tubulaire 60 sont en contact direct avec la paroi du perçage 18, au jeu près afin de permettre à l'élément d'accrochage 24 de coulisser par rapport au corps 22.

En raison du déplacement de l'élément d'accrochage 24 par rapport au corps 22, les becs d'accrochage 74 des pinces 62 arrivent axialement en vis-à-vis de l'extrémité 86 de l'écarteur 26. Les pinces 62 s'écartent radialement et latéralement les unes des autres jusqu'à la position déployée de la figure 3, de sorte à former un cercle de diamètre supérieur au diamètre du perçage 18. Les becs d'accrochage 74 sont alors en saillie radiale par rapport au perçage 18.

L'entraînement en rotation du tirant 28 est poursuivi jusqu'à ce que lesdits becs d'accrochage 74 soient en appui axial contre la deuxième face 16 de la structure 13, autour du perçage 18. Le serrage du tirant 28 et de la tige 64 permet d'appliquer un effort de compression qui solidarise l'une à l'autre les structures 12, 13 à assembler. L'assemblage 14 de la figure 3 est ainsi obtenu.

Les structures 12, 13 de la figure 3 ont une épaisseur 98 totale proche de l'épaisseur minimale que peut assembler la fixation 10. La fixation 10 installée dans l'assemblage 14 présente une configuration dans laquelle la tige 64 est entièrement reçue dans la partie taraudée 92 du tirant 28 et/ou dans laquelle l'extrémité des languettes 46 viennent en butée contre la seconde extrémité 70 fermée des rainures 68.

Avec des structures ayant au contraire une épaisseur maximale d'assemblage, la fixation 10 installée présente une configuration dans laquelle l'extrémité 86 de l'écarteur 26 est sensiblement coplanaire des becs d'accrochage 74.

La fixation 10 décrite ci-dessus permet d'avoir une grande amplitude de serrage entre les épaisseurs 98 minimale et maximale des structures 12, 13 à assembler. L'élément d'accrochage 24 coulissant et de même diamètre que celui du corps 22 fournit une fixation 10 de longueur variable.

Par ailleurs, les surfaces de montage 36, 90 sont compatibles avec de nombreux outils de montage disponibles commercialement.

La fixation 10 présente également un avantage par rapport à la fixation décrite dans le document EP3147520 précédemment cité, qui utilise un écarteur rotatif, qui a pour inconvénient de vriller l'extrémité des becs d'accrochage, et d'user prématurément les pinces.

## Revendications

1. Fixation (10) pour l'assemblage temporaire d'au moins deux structures (12, 13) comprenant un perçage (18), ladite fixation comprenant :
- un corps (22) tubulaire, s'étendant selon un axe principal (20), entre une première extrémité et une seconde extrémité comprenant au moins deux languettes (46) longitudinales ;
- un élément d'accrochage (24), bloqué en rotation par rapport au corps et apte à coulisser axialement dans le corps ; ledit élément d'accrochage comprenant : une base (60) tubulaire ; et une pluralité de pinces (62) élastiques reliées à une extrémité de ladite base, chaque pince comprenant un bec d'accrochage (74) ;
- un dispositif d'entraînement (28) de l'élément d'accrochage (24) ; et
- un écarteur (26) fixe par rapport au corps (22), la pluralité de pinces élastiques étant disposée autour dudit écarteur ;
où
- la base (60) tubulaire comporte : une surface externe (66) sensiblement cylindrique ; et au moins deux rainures (68) ménagées longitudinalement dans ladite surface externe ; et
- la fixation est configurée de sorte que chaque languette (46) du corps est apte à coulisser axialement dans l'une des rainures (68) de la base tubulaire.

2. Fixation selon la revendication 1, dans laquelle : l'élément d'accrochage comporte une fente (76) longitudinale ; et la fixation comporte une goupille (30) fixée au corps (22) et traversant ladite fente, de sorte à bloquer en rotation l'élément d'accrochage par rapport au corps.

3. Fixation selon la revendication 2, dans laquelle l'écarteur (26) comporte un trou traversant (84) dans lequel passe la goupille (30).

4. Fixation selon la revendication 1 ou 2, dans laquelle l'élément d'accrochage (24) est en liaison hélicoïdale avec le dispositif d'entraînement (28), une rotation du dispositif d'entraînement étant ainsi apte à faire coulisser l'élément d'accrochage par rapport au corps.

5. Fixation selon la revendication 4, dans laquelle l'élément d'accrochage (24) comprend une tige (64) filetée s'étendant depuis la base (60) tubulaire ; et le dispositif d'entraînement (28) comporte un taraudage (92) apte à coopérer avec ladite tige filetée.

6. Fixation selon l'une des revendications précédentes, configurée de sorte que les languettes (46) du corps coulissant axialement dans les rainures (68) de l'élément d'accrochage forment une surface cylindrique sensiblement continue avec la surface externe (66) de la base tubulaire.

7. Fixation selon l'une des revendications précédentes, dans laquelle chaque languette (46) du corps comporte deux premiers bords (52) longitudinaux sensiblement plans ; et chaque rainure (68) de l'élément d'accrochage comporte : deux deuxième bords (72) longitudinaux, de forme complémentaire aux premiers bords longitudinaux d'une languette correspondante ; et un fond (73) disposé entre les deux deuxièmes bords longitudinaux.

8. Fixation selon l'une des revendications précédentes, dans laquelle le corps comprend une tête (32) élargie, ladite tête comprenant une surface d'appui (94) destinée à venir en appui contre une première face (15) des structures.

9. Fixation selon la revendication 8, dans laquelle la tête (32) élargie forme la première extrémité dudit corps, la tête comprenant des premières surfaces de montage (36) aptes à s'assembler à un outil d'installation pour bloquer en rotation ledit corps par rapport aux structures.

10. Fixation selon l'une des revendications précédentes, dans laquelle une extrémité du dispositif d'entraînement (28) comprend des deuxièmes surfaces de montage (90) aptes à s'assembler à l'outil d'installation pour entraîner en rotation ledit dispositif d'entraînement par rapport au corps.

11. Assemblage (14) comprenant : des structures (12, 13) à assembler, comprenant une première (15) et une seconde (16) faces opposées, ainsi qu'un perçage (18) débouchant sur chacune desdites première et seconde faces ; et une fixation (10) selon l'une des revendications 8 à 10, la pluralité de pinces (62) élastiques étant disposée dans le perçage, les becs d'accrochage (74) desdites pinces étant disposés autour de l'écarteur (26), la surface d'appui (94) de la tête et les becs d'accrochage (74) venant au contact respectivement de la première face (15) et de la seconde face (16) des structures.

## Patentansprüche

1. Befestigung (10) für die vorübergehende Montage von mindestens zwei Strukturen (12, 13), die eine Bohrung (18) umfassen, wobei die Befestigung Folgendes umfasst:
- einen rohrförmigen Körper (22), der sich entlang einer Hauptachse (20) erstreckt, zwischen einem ersten Ende und einem zweiten Ende, das mindestens zwei Längszungen (46) umfasst;
- ein Hakenelement (24), das in Bezug auf den Körper drehfest ist und im Körper axial gleiten kann; wobei das Hakenelement umfasst: eine röhrenförmige Basis (60); und eine Vielzahl von elastischen Klammern (62), die mit einem Ende der Basis verbunden sind, wobei jede Klammer eine Rastnase (74) umfasst;
- eine Antriebsvorrichtung (28) für das Hakenelement (24); und
- einen Abstandshalter (26), der in Bezug auf den Körper (22) feststehend ist, wobei die mehreren elastischen Klammern um den Abstandshalter herum angeordnet sind;
wobei
- die röhrenförmige Basis (60) umfasst: eine im Wesentlichen zylindrische Außenfläche (66); und mindestens zwei Nuten (68), die in Längsrichtung in der Außenfläche ausgebildet sind; und
- die Befestigung so gestaltet ist, dass jede Zunge (46) des Körpers axial in einer der Nuten (68) der röhrenförmigen Basis gleiten kann.

2. Befestigung nach Anspruch 1, wobei: das Hakenelement einen Längsschlitz (76) aufweist; und die Befestigung einen Stift (30) aufweist, der am Körper (22) befestigt ist und durch den Schlitz hindurchgeht, so dass das Hakenelement in Bezug auf den Körper drehfest arretiert wird.

3. Befestigung nach Anspruch 2, wobei der Abstandshalter (26) ein Durchgangsloch (84) aufweist, durch das der Stift (30) läuft.

4. Befestigung nach Anspruch 1 oder 2, bei der das Hakenelement (24) schraubenförmig mit der Antriebsvorrichtung (28) verbunden ist, wobei eine Drehung der Antriebsvorrichtung somit geeignet ist, das Hakenelement relativ zum Körper zu verschieben.

5. Befestigung nach Anspruch 4, wobei das Hakenelement (24) eine Gewindestange (64) umfasst, die sich von der röhrenförmigen Basis (60) aus erstreckt; und die Antriebsvorrichtung (28) ein Innengewinde (92) aufweist, das mit der Gewindestange zusammenwirken kann.

6. Befestigung nach einem der vorhergehenden Ansprüche, die so konfiguriert ist, dass die Zungen (46) des Körpers, die axial in den Nuten (68) des Hakenelements gleiten, eine zylindrische Oberfläche bilden, die im Wesentlichen kontinuierlich mit der Außenfläche (66) der röhrenförmigen Basis ist.

7. Befestigung nach einem der vorhergehenden Ansprüche, bei der jede Zunge (46) des Körpers zwei im Wesentlichen ebene erste Längskanten (52) aufweist; und jede Nut (68) des Hakenelements Folgendes umfasst: zwei zweite Längskanten (72), deren Form komplementär zu den ersten Längskanten einer entsprechenden Zunge ist; und einen Boden (73), der zwischen den beiden zweiten Längskanten angeordnet ist.

8. Befestigung nach einem der vorhergehenden Ansprüche, wobei der Körper einen vergrößerten Kopf (32) umfasst, wobei der Kopf eine Auflagefläche (94) umfasst, die dazu bestimmt ist, an einer ersten Seite (15) der Strukturen anzuliegen.

9. Befestigung nach Anspruch 8, wobei der erweiterte Kopf (32) das erste Ende des Körpers bildet, wobei der Kopf erste Montageflächen (36) umfasst, die geeignet sind, mit einem Installationswerkzeug zusammenzupassen, um den Körper in Bezug auf die Strukturen drehfest zu arretieren.

10. Befestigung nach einem der vorhergehenden Ansprüche, wobei ein Ende der Antriebsvorrichtung (28) zweite Montageflächen (90) umfasst, die geeignet sind, sich mit dem Installationswerkzeug zusammenzufügen, um die Antriebsvorrichtung relativ zum Körper in Drehung zu versetzen.

11. Montage (14), umfassend: Strukturen (12, 13), die zusammengefügt werden sollen, mit einer ersten (15) und einer zweiten (16) gegenüberliegenden Seite sowie einer Bohrung (18), die in jede der ersten und zweiten Seite mündet; und eine Befestigung (10) nach einem der Ansprüche 8 bis 10, wobei die Vielzahl von elastischen Klammern (62) in der Bohrung angeordnet sind, die Rastnasen (74) der Klammern um den Abstandshalter (26) herum angeordnet sind, die Auflagefläche (94) des Kopfes und die Rastnasen (74) jeweils die erste Seite (15) und die zweite Seite (16) der Strukturen berühren.

## Claims

1. A fastener (10) for the temporary connection of at least two structures (12, 13) comprising a bore (18), said fastener comprising:
- a tubular body (22), extending along a main axis (20), between a first end and a second end comprising at least two longitudinal tongues (46);
- a latching element (24), prevented from rotating with respect to the body and able to slide axially in the body; said latching element comprising: a tubular base (60); and a plurality of resilient clamps (62) connected to one end of said base, each clamp comprising a hooking beak (74);
- a drive device (28) for the latching element (24); and
- a spacer (26) fixed with respect to the body (22), the plurality of elastic clamps being arranged around said spacer;
where
- the tubular base (60) comprises: a substantially cylindrical outer surface (66); and at least two grooves (68) formed longitudinally in said outer surface; and
- the fixing is configured so that each tongue (46) of the body is able to slide axially in one of the grooves (68) of the tubular base.

2. A fastener as claimed in claim 1, in which: the fastening element comprises a longitudinal slot (76); and the fastener comprises a pin (30) fixed to the body (22) and passing through said slot, so as to prevent rotation of the fastening element relative to the body.

3. A fastener as claimed in claim 2, in which the spacer (26) has a through hole (84) through which the pin (30) passes.

4. A fastener according to claim 1 or 2, in which the hooking element (24) is in helical connection with the drive device (28), rotation of the drive device thus being able to cause the hooking element to slide relative to the body.

5. A fastener as claimed in claim 4, wherein the catch member (24) comprises a threaded shank (64) extending from the tubular base (60); and the drive device (28) comprises an internal thread (92) co-operable with said threaded shank.

6. A fastener according to one of the preceding claims, configured so that the tongues (46) of the body sliding axially in the grooves (68) of the attachment element form a cylindrical surface substantially continuous with the outer surface (66) of the tubular base.

7. A fastener according to one of the preceding claims, in which each tongue (46) of the body comprises two substantially flat first longitudinal edges (52); and each groove (68) of the fastening element comprises: two second longitudinal edges (72), complementary in shape to the first longitudinal edges of a corresponding tongue; and a base (73) disposed between the two second longitudinal edges.

8. A fastener according to one of the preceding claims, in which the body comprises an enlarged head (32), said head comprising a bearing surface (94) intended to bear against a first face (15) of the structures.

9. A fastener according to claim 8, wherein the enlarged head (32) forms the first end of said body, the head comprising first mounting surfaces (36) able to mate with an installation tool to rotationally lock said body relative to the structures.

10. A fastener according to any of the preceding claims, wherein one end of the driver (28) comprises second mounting surfaces (90) able to mate with the installation tool to rotate said driver relative to the body.

11. An assembly (14) comprising: structures (12, 13) to be assembled, comprising a first (15) and a second (16) opposite faces, as well as a bore (18) opening onto each of said first and second faces; and a fastener (10) according to one of claims 8 to 10, the plurality of elastic clamps (62) being arranged in the bore, the hooking noses (74) of said clamps being arranged around the spacer (26), the bearing surface (94) of the head and the hooking noses (74) coming into contact respectively with the first face (15) and the second face (16) of the structures.
